# EUROPEAN PATENT APPLICATION

(11) **EP 2 161 557 A1**
(43) Date of publication of application: **10.03.2010**
(21) Application number: 08105237.5
(22) Date of filing: 04.09.2008
(51) Int. Cl.: G01L 5/04, B60B 31/02, G01L 5/10

(54) **Device and method for measuring spoke tension**

(71) Applicant: Holland Mechanics BV, 1440 AJ Purmerend (NL)
(72) Inventor: Begheyn, Richard Petrus, 1444 EA, PURMEREND (NL)
(74) Representative: Uittenbogaart, Gustaaf Adolf

(57) **Abstract**

The invention concerns a device for measuring spoke tensions in an wheel (1) comprising a hub (13) with a shaft (2), a rim (7) and tensioned spokes (5) between flanges (4) of the hub and the rim, comprising a clamp (3) for holding the shaft, a strike unit (6) for touching spokes in order to set the spokes into vibration, a vibration sensor (15) for detecting the vibration of a spoke and means for calculating from the detected vibration the tension in the spoke. In accordance with the invention the vibration sensor determines changes in position of the spoke at a high sampling rate.

## Description

The invention concerns a device according to the preamble of claim 1. Such a device is known from WO 9745712. In the known device, the vibration sensor comprises a coil that detects movement of inductable elements such as a spoke. The movement of the spoke generates in the coil an electrical voltage that is a measure of the movement speed and from the changing electrical voltage the vibration of the spoke can be determined. The disadvantage of the known sensor is that it can detect the movement of the spoke only at a small distance, for instance at a distance less than 5 mm, so that the vibration sensor must be in the direct vicinity of the spokes. This small distance makes it difficult to adjust the device to wheels of different dimensions without extensive changes in the device. This limits the practical use of the device.

In order to overcome this disadvantage the vibration sensor is in accordance with claim 1. By determining the change in position of the spoke at a high sampling rate the vibration of the spoke can be determined. The vibration sensor need not be in the immediate vicinity of the spokes as it detects only the location of the spoke

In accordance with an embodiment, the device is according to claim 2. At this sampling rate the obtained frequency spectrum makes it possible to determine spoke tensions in wheels with lower spoke tension, like lower quality bicycle wheels.

In accordance with an embodiment, the device is according to claim 3. At this sampling rate, the obtained frequency spectrum makes it possible to determine spoke tensions in bicycle wheels that have a very high tension, as for instance in high quality wheels suitable for racing.

In accordance with an embodiment, the device is according to claim 4. At this sampling rate, the obtained frequency spectrum is suitable for calculating the spoke tension in wheels with shorter and thicker spokes.

In accordance with an embodiment, the device is according to claim 5. In this way, the sensor can have a simple design.

In accordance with an embodiment, the device is according to claim 6. In this way, there is no requirement to measure the distance between the sensor and the spoke.

In accordance with an embodiment, the device is according to claim 7. In this way, the frequency spectrum can be determined in for wheels with spokes of all materials and dimensions as only the locations of the surface of the spoke have to be determined.

In accordance with an embodiment, the device is according to claim 8. In this way, the spoke can be positioned in front of the sensor so that the sensor can determine the vibration frequency before the vibration frequency in the next spoke is determined.

In accordance with an embodiment, the device is according to claim 9. In this way, the spoke tensions for each spoke can be registered in a simple way.

The invention also concerns a method in accordance with the preamble of claim 10. Such a method is know from the before mentioned document WO 9745712 wherein the oscillations of the spoke are measured by a coil that is brought near the oscillating spoke. The disadvantage of this method is that the distance between the coil and the spoke and the material of the spoke influence the result.

In order to overcome the disadvantage the method is according to claim 10. Using a distance sensor makes it easy to determine the vibration, so that the spoke tensions can be determined accurately.

In accordance with a further embodiment, the method is according to claim 11. In this way the amplitude of the vibration is as large as possible during the measurements.

In accordance with a further embodiment, the method is according to claim 12. In this way the spoke vibrates in a highly agitated way.

Hereafter several embodiments elucidate the invention with the aid of a drawing. In the drawing
Figure 1 shows a schematical section of a device for measuring the spoke tension in a spoked wheel,
Figure 2 shows a diagram of a signal path for analyzing spoke tension
Figure 3 shows a schematical view of a further device for measuring spoke tension,
Figure 4 shows a hammer for bringing a spoke into vibration, and
Figure 5 shows a position sensor of a spoke illuminated by a beam of coherent light.

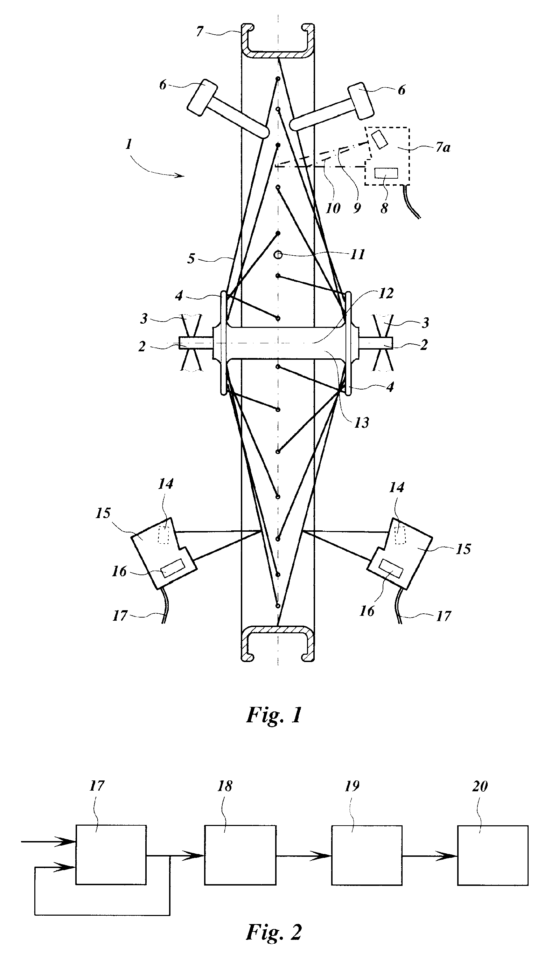

Figure 1 shows a first embodiment of a device for measuring the tension in spokes. A wheel 1 has a hub 13 and a rim 7 connected by tensioned spokes 5. The hub 13 has flanges 4 for coupling the spokes 5 and a shaft 2 around which the hub 13 with the flanges 4 can rotate. The shaft 2 is mounted in clamps 3 that are part of a frame (not shown). The frame can have a drive (not shown) for rotating the wheel 1 and a detector (not shown) for detecting a valve hole 11. It is also possible to rotate the wheel 1 by hand. Based on the detection of the valve hole 11 with a sensor (not shown) a control system (not shown) can determine the rotative position of the wheel 1 when the spoke hole 11 is detected. By counting the spokes 5 that pass a sensor such as a distance sensor 15 the control system knows the specific spoke number that is in front of the distance sensor 15.

At each side of the wheel 1, a plectrum 6 is mounted in such a way that during rotation the spokes 5 of the rotating wheel 1 are touched by one of the plectrums 6 and are agitated one after the other and start vibrating. The harmonic frequency in which a spoke 5 vibrates depends on the tension in the spoke 5. Generally, the harmonic frequencies of spokes 5 are in the range of 5 - 500 Hz. By determining the harmonic frequency the tension in the spoke 5 can be calculated.

For determining the harmonic frequency in the spokes 5, a distance sensor 15 is mounted at each side of the wheel 1. The distance sensor 15 comprises a laser beam transmitter 16 that directs a laser beam in a direction more or less perpendicular to the plane in which spokes 5 move. When a rotating spoke 5 intersects the laser beam, a light spot is visible on the spoke 5. The distance sensor 15 comprises a light receiving unit 14 with lenses and a CCD sensor that can accurately determine the distance between the sensors and the light spot. Due to the angle between the light beam and the direction of the reflection from the light spot to the receiving unit 14 the distance between the laser beam transmitter 16 and the light spot is determined therewith. A vibrating spoke 5 vibrates also in the direction of the laser beam. This means that the location of the light spot on the spoke 5 vibrates in the direction of the light beam and the light receiving unit 14 can detect this change in distance and therewith the vibration.

In order to improve the signal/noise ratio of the distance detected by the sensor 15 focusing means can be included in the sensor 15. After the sensor 15 detects the spoke 5 first the distance between the sensor 15 and the oscillating spoke 5 is determined. After determining this distance, the detection of the changes in the distance and the frequency thereof is easier and more accurate as they are changes on this known distance. The determination of the average distance between the sensor 15 and the spoke 5 has to be with an accuracy of approximately 0,1 to 0,3 mm in order that the amplitude of the oscillation, which is approximately 0,2 mm, is clearly detectable. As the nearest distance of all spokes 5 in a wheel from the sensor 15 varies due to irregular spoke tensions, irregularities in the rim 7 and in the shapes of the spokes 5, all distances between the spokes 5 and the sensor 15 vary far more than 0,1 to 0,5 mm and so have to be measured for each individual spoke 5.

The design of the distance sensor 15 is such that the control system detects at least every 100 microseconds the location of the light spot on the spoke 5, which means that at a vibration frequency of 500 Hz the spoke position is determined 20 times during each vibration. Increasing the frequency of detecting the spoke position to at least every 50 microsecond or preferably to every 20 microsecond the vibration frequency can be determined more accurately. A further advantage of more frequent measuring of the distance is that the speed of the spokes 5 when passing in front of the distance sensor 15 can be higher.

In the situation, that the wheel 1 with a circumference of approximately 2 meter makes a full rotation every second the laser beam transmitter 16 creates a light spot on a spoke 5 during 500 microseconds. That means with a detection frequency of every 20 microseconds it is possible to measure the position of the light spot 25 times, which is sufficient to determine the vibration frequency of the spoke 5. In situations wherein the distance sensor 15 detects the location of the spoke 5 at a lower frequency, the rotation speed of the wheel 1 must be lower or it might even be advantageous to hold the spoke 5 still in the light beam. This can be done by hand or with a separate drive of the wheel 1 as described hereafter.

Figure 1 shows a distance sensor 7a in interrupted lines in a different embodiment with a laser beam transmitter 8 wherein the laser beam is parallel to the rotation axis 12. This means that the laser beam lights the spokes 5 under an angle so that the light spot on the spoke 5 is slightly less bright but in many situations this is still sufficient. The light spots on the spokes 5 that are coupled to the left flange 4 of the hub 13 are visible with a furthest reflection beam 9 in the distance sensor 7a and the light spots on the spokes 5 that are coupled to the right flange 4 of the hub 13 are visible with a nearest reflection beam 10.

Figure 2 indicates the signal transfer in the control system. After the distance sensor 7a, 15, indicated in figure 2 with 17, detects a spoke 5, the sensor 17 determines the average distances between the vibrating spoke 5 and the sensor 17 for each spoke 5. A memory 18 registers this average distance for each spoke 5. This average distance is also fed back into the sensor 17 and the sensor 17 uses this information for focussing on the spoke 5. After focussing the sensor 17, the sensor 17 detects the changes in the distance between the sensor 17 and the spoke 5 in dependence of time and the control system registers the changes in dependence of time in the memory 18 as well. The information that is stored for the spoke 5 in the memory 18 is analysed in a frequency-analyzing unit 19. The frequency-analysing unit 19 detects the one or two (in case of crossing spokes) harmonic frequencies of the spoke 5 and after evaluating the dimensions of the spoke 5 and in case of more than one harmonic frequency the amplitude of the oscillations of both connected spokes 5 the tension of the spokes 5 are stored in a spoke tension memory 20 and can be used as separate information or for further operations on the wheel 1.

In the shown embodiments, the direction of the laser beam is more or less perpendicular to the plane of movement of the spokes 5. In another embodiment, the direction of the light beam can make a slight angle with the plane of movement of the spokes while still being more or less perpendicular to the spokes. In this way it is possible that the light beam intersects the spokes 5 for a longer period so that the detection frequency can be lower. Another advantage might be that vibrations more or less in the plane of movement of the spokes 5 are detected, which might be an advantage in case of crossing spokes 5 that touch each other so that vibrations in de direction perpendicular to the plane of movement of the spokes 5 is locally limited.

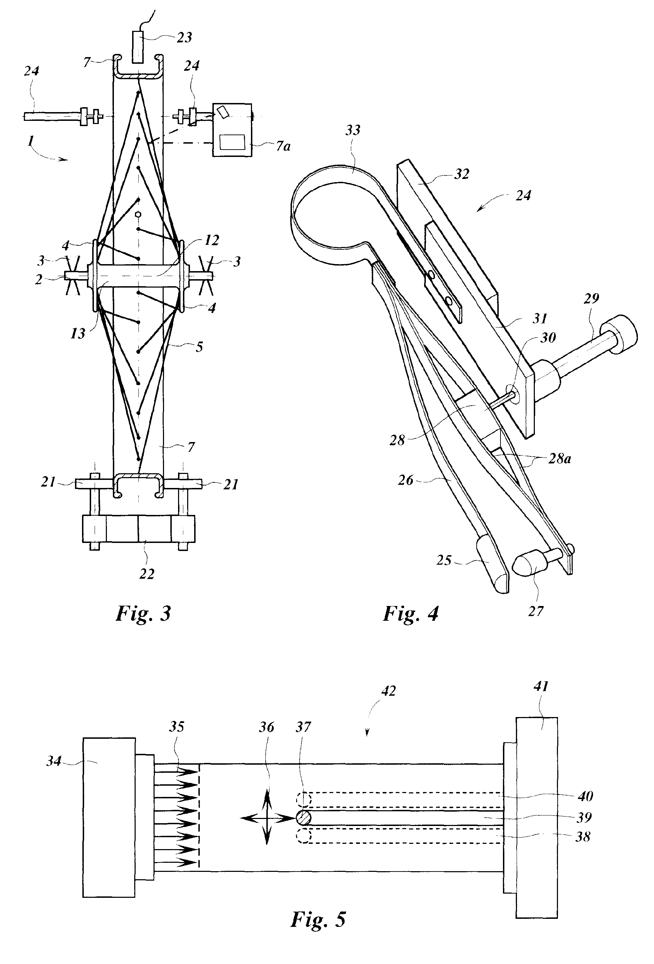

Figure 3 shows a further embodiment of the invention wherein several components are more or less similar to the components as shown in figure 1. Clamps 3 support the wheel 1 and rollers 21 rotate the wheel 1 around the rotation axis 12. A drive 22 rotates the rollers 21 and can position the spokes 5 in the beam of the distance sensor 7a. First a sensor 23 detects the nipple hole in the rim 7 so that the control system knows which spoke 5 is in the beam of the sensor 7a. The distance sensor 7a first detects that there is a spoke 5 in its beam and the control system then stops the drive 22 so that the spoke 5 remains in the beam. In a next step the sensor 5 measures the distance to the spoke 5 that is positioned in the beam of the sensor 7a and focuses on the spoke 5 as described before.

Based on the distance from the sensor 7a the control system decides which flange 4 of the hub 13 connects to the spoke 5 and activates a hammer 24 at that side of the wheel 1 to strike against the spoke 5. Striking against the spoke 5 starts the vibration of the spoke 5. The vibration will last a second and during this period the distance sensor 7a detects the changes in distance caused by the vibration. Based on the measured distance changes the control system can determine the harmonic frequency and the tension in the spoke 5. After the harmonic frequency is available, the drive 22 rotates the wheel 1 so that the next spoke 5 is in the beam of the sensor 7a and the sequence is repeated.

Figure 4 shows the hammer 24 in detail. A cylinder 29 is mounted on a base plate 31. The cylinder 29 has a piston shaft 30 that is fastened to a connector 28 that has two coupling strips 28a in order to reduce the weight of the connector 28 as much as possible. A leaf spring 26 with a hammerhead 25 at one end is connected with its other end to one end of connector 28. At the other end the connector 28 has a buffer 27 against which the hammer-head 25 can swing. The buffer 27 has a pointed shape and is from soft rubber so that the swinging movement of the hammerhead 25 more or less stops with almost no rebound. A guide spring 33 connects the connector 28 to the base plate 31 and so prevents rotation of the connector 28 around the piston shaft 30. A mounting bracket 32 positions the base plate 32 in the device in which the wheel 1 is mounted by the clamps 3 so that after activating the hammer 24 the hammerhead 25 hits the spoke 5 that is in the beam of the sensor 7a.

Activating the cylinder 29 extends the piston shaft 30 and moves the connector 28 with a high speed towards the spoke 5. At the end of its stroke the piston shaft 30 stops and the connector 28 stops also. The hammerhead 25, that had the same speed as the connector 28 during its movement continues with this speed until it collides with the spoke 5 so that it starts vibrating. After that, the leaf spring 26 moves the hammerhead 25 against the buffer 27 while the cylinder 29 pulls the connector 28 with the hammerhead 25 back into the start position.

Figure 5 shows a further embodiment of a position sensor 42 that can be used for detecting the vibration frequency of the spokes 5. The position sensor 42 has an emitter 34 that sends a laser beam 35 in the direction of a spoke 37. The spoke 37 has a vibration that leads to spoke movement 36 in the laser beam 35. The laser beam 35 falls on a CCD camera 41. The spoke 37 leaves a spoke shadow 39 on the CCD camera 41 and the spoke movement 36 leaves a shadow between a first extreme shadow 38 and a second extreme shadow 40. The signals from the CCD camera 41 can be detected at high frequency and processed in a way similar as earlier described for the distance sensor.

In the earlier described embodiments the spoke 5 of which the vibration is analysed is agitated either by the plectrum 6 or the hammer 24. By directly agitating the spoke 5 vibrations in the other parts of the wheel 1 such as the other spokes 5 or the rim 7 have a small amplitude so that they only influence the vibrations of the spoke 5 in a negligent way. In another embodiment a hammer agitates the rim 7 so that the whole wheel 1 vibrates. There are damping means that damp vibrations in all spokes and/or the rim 7 so that only the spoke 5 near the distance sensor or the position sensor can vibrate.

## Claims

1. Device for measuring spoke tensions in an wheel (1) comprising a hub (13) with an shaft (2), a rim (7) and tensioned spokes (5) between flanges of the hub and the rim, comprising a clamp (3) for holding the shaft, a strike unit (6) for touching spokes in order to set the spokes into vibration, a vibration sensor (15) for detecting the vibration of a spoke and means (18,19,20) for calculating from the detected vibration the tension in the spoke **characterized in that** the vibration sensor (7a,15;42) determines changes in position of the spoke (5) at a high sampling rate.

2. Device in accordance with claim 1 wherein the sampling rate is frequenter than every 100 microsecond.

3. Device in accordance with claim 1 wherein the sampling rate is frequenter than every 50 microsecond.

4. Device in accordance with claim 1 wherein the sampling rate is frequenter than every 20 microsecond.

5. Device in accordance with one of the previous claims wherein the vibrations sensor (7a, 15) measures the distance between the sensor and the spoke (5).

6. Device in accordance with one of the previous claims wherein the vibration sensor (42) detects the sideways movement of a shadow of the spoke (5) illuminated by a beam of coherent light (35) such as a laser beam.

7. Device in accordance with one of the previous claims wherein the vibration sensor (7;15) comprises a transmitter (8;16) of a beam of coherent light directed towards the path of rotating spokes and a light receiving element (14) that determines the change in location of a reflection of this light beam on a spoke.

8. Device in accordance with one of the previous claims wherein a drive unit rotates and positions the wheel.

9. Device in accordance with one of the previous claims wherein a sensor determines a spoke position of the spoke of which the vibration is determined, preferably using the location of a valve hole (11) in the rim.

10. Method for measuring spoke tensions in a wheel (1) composed of a hub (13), a rim (7) and tensioned spokes (5) between the hub and the rim wherein first a spoke is stroked in order to bring it into a vibration and the vibration of the spoke is measured and after that the spoke tension is determined based on the measured vibration **characterized in that** the vibration of the spoke (5) is determined by measuring the vibrations of the spoke with a distance sensor (7a,15).

11. Method in accordance with claim 10 wherein the spoke (5) is first positioned in front of the distance sensor (7a,15) and then brought into vibration.

12. Method in accordance with claim 11 wherein the spoke (5) is brought into vibration by hitting it with a hammerhead (25).
